# EUROPEAN PATENT SPECIFICATION

(11) **EP 2 043 457 B1**
(45) Date of publication and mention of the grant of the patent: **28.03.2012**
(21) Application number: 07747484.9
(22) Date of filing: 01.06.2007
(51) Int. Cl.: A23L 1/0522, A23L 1/035, A23L 1/221, A23L 1/226, A23D 7/005

(54) **AMYLASE-INDUCED SENSORY EFFECT OF LOW FAT EMULSIONS COMPRISING HYDROPHOBIZED STARCH AS EMULSIFIER**
AMYLASE INDUZIERTE SENSORISCHE WIRKUNG VON FETTARMEN EMULSIONEN MIT HYDROPHOBISIERTER STÄRKE ALS EMULGATOR
EFFET SENSORIEL INDUIT PAR L'AMYLASE D'ÉMULSIONS À FAIBLE TENEUR EN MATIÈRE GRASSE COMPRENANT DE L'AMIDON HYDROPHOBISÉ UTILISÉ COMME ÉMULSIFIANT

(30) Priority: 18.07.2006 EP 06117370
(43) Date of publication of application: 08.04.2009
(73) Proprietor: Friesland Brands B.V., 7943 PE Meppel (NL)
(72) Inventor: VAN AKEN, George, Alexander, NL-6711 BE Ede (NL); ZOET, Franklin, Delano, NL-6987 CM Giesbeek (NL); MINOR, Marcel, NL-6704 AA Wageningen (NL)
(74) Representative: Swinkels, Bart Willem
(86) International application number: PCT/NL2007/050261
(87) International publication number: WO 2008/010709

(56) References cited:
- EP-A2- 0 189 161
- EP-A2- 1 149 845
- WO-A-2005/070227
- AU-A- 5 429 601
- JP-A- 62 003 748
- JP-A- 2000 157 218
- JP-A- 2005 168 319
- US-A- 6 077 558
- DATABASE WPI Week 200422, Derwent Publications Ltd., London, GB; AN 2004-233283 & JP 2004 081065 A (QP CORP) 18 March 2004

## Description

### FIELD OF THE INVENTION

The present invention relates to the field of food production, in particular to methods of producing food compositions having improved sensory characteristics comprising oil-in-water and fat-in-water emulsions and to the improved food products and oil-in-water and fat-in-water emulsions themselves. The invention also relates to new uses of modified starch for modulating one or more sensory characteristics of food compositions.

### BACKGROUND OF THE INVENTION

Modified starch has been used in the art to stabilize emulsions, especially emulsions of oil or fat in water and emulsions of water in oil or fat. For example, AU 200154296 describes an oil-in-water emulsion comprising a modified starch as stabilizer of the emulsion. Similarly, US 6,077,558 describes an emulsifying system comprising an octenyl succinic anhydride modified starch (OSA starch) and an acetylated monoglyceride as emulsifier, in order to make nutritional products having a desired stability.

EP1149845 discloses the use of OSA starch for stabilising an emulsion of a flavour oil blend in water.

In JP2005168319, OSA starch has been used to prepare a static soak, comprising an emulsion, for treating meat or fish. Said emulsion is used for covering the solid food (fish or meat) and appears to be applied as a frying coating.

It is an object of the present invention to provide a new use for modified starch, especially hydrophobized starch, such as OSA starch. It is a further object to provide a method for modulating, especially for improving, the sensory rating of food compositions.

### GENERAL DEFINITIONS

"Fat" refers to a material that consists predominantly (at least 80% or more) of triglycerides and can be in stable liquid, partially crystalline or completely crystalline form, dependent on the temperature.

"Oil" refers to a fat that is in its liquid form.

"Modified starch" refers herein to starch that compared to the naturally isolated material has been subjected to a treatment that altered the composition and properties of the starch.

"Hydrophobic starch" or "hydrophobically modified starch" or "hydrophobized starch" refers to starch which has been chemically modified to give a hydrophobic character. In other words hydrophobized starch refers to starch that has surface active properties or in yet other words is capable of stabilizing fat-in-water emulsions. Various ways exist to give starch a hydrophobic character, e.g. by incorporating hydrophobic groups into starch. An example is the octenyl succinate ester of starch made by treating starch with octenyl succinic anhydride (OSA). Thus, hydrophobic alk(en)yl groups are incorporated into a normally hydrophilic starch molecule. The hydrophobic groups may comprise hydrocarbon chains of various lengths, such as 8 - 12 carbons. Preparation of hydrophobic starch derivatives can be carried out by procedures known in the art. One such method is disclosed in US 2,661,349, which describes hydrophobic starch derivatives such as starch alkyl or alkenyl succinate (see e.g. Columns 5-9). It describes an aqueous method in which such derivatives are prepared using a standard esterification reaction where the anhydride reagent and starch are suspended in water and mixed under alkaline conditions. Another method for preparing the hydrophobic starch derivatives is disclosed in US 5,672,699 (see e.g. Column 2-4). This patent describes a method for preparing hydrophobic starch derivatives having improved reaction efficiencies wherein the starch and anhydride reagent are pre-dispersed or intimately contacted at low pH before being brought to alkaline reaction conditions. Other disclosures of the starch derivatives and the method of preparation can be found in "Starch: Chemistry and Technology", .sub.2nd edition, edited by R. L. Whistler et al., 1988, pp. 341-343 and "Modified Starches: Properties and Uses", edited by O. Wuirzburg, 1986, Ch. 9, pp. 131-147.

"OSA" refers to n-octenyl succinic anhydride. "OSA starch" is commercially available and can be obtained from various commercial suppliers such as, amongst others, Roquette and National Starch, as Clear gum C0 01 and Purity Gum 2000 or 539-E respectively.

A "low-fat" food product refers to a food product in which the total fat content has been reduced compared to the standard fat containing product, preferably so that the low-fat product contains at least 10%, 20%, 30%, 40% or 50%, 60%, 70%, 80%, 90%, 95% or 99% less fat than the standard product. For example, when referring to a product which normally has about 3 wt% fat content (e.g. custard or cream dessert), a corresponding low-fat product having at least 30% less fat has only 2.1 wt% fat or less. When referring to a product which normally has about 35 wt% fat content (e.g. mayonnaise), a corresponding low-fat product having at least 30% less fat is a product with only 24.5 wt% fat or less (e.g. low-fat mayonnaise), and so forth.

"Emulsified fat" refers herein to fat which has been emulsified using an emulsifier, such as modified starch or whey protein hydrolysate (WPI). Similarly, "fat comprised in the emulsion" refers to the emulsified fat. Also mixtures of fat emulsified using two or more different emulsifiers are encompassed herein. The term "OSA-emulsified fat" is used to refer to emulsified fat which has been emulsified using chemically modified starch, especially hydrophobized starch, such as OSA starch.

"Starch" is used herein to refer to any type of starch, such as starch obtainable from higher plants (natural or genetically modified), such as potato starch, maize/corn starch, pea starch, rice starch, wheat starch, tapioca starch and the like.

"Sensory rating" or "sensory perception" is used herein to refer to a subject's rating of one or more sensory attributes of a food product. An "improved" or "modulated" sensory rating refers to a modulated, preferably an improved rating of one or more sensory attributes, such as for example sensory scores/perception of fat- and/or thickness related attributes.

"Fat and/or thickness related sensory attributes" refer to one or more of the following sensory attributes: creamy, fatty, thick, or mouth filling, mouth feel, coating, after feel, slippery, sticky, satiation and the like (see Example). It is noted that whether or not a sensory attribute is an "improvement" largely depends on a subjective perception and on the type of food product, both of which may vary (e.g. in different cultures).

Therefore, the sensory rating is herein referred to as being "modulated" rather than "improved".

"Fat soluble flavours" refers to materials added to a food product to impart an aroma or flavour to the product, and are much better soluble in fat than in water, meaning that when equilibrated between a triglyceride oil such as sunflower oil and water the ratio of the concentration of the flavour in the oil over the concentration of the flavour in the water exceeds a number of 100. Examples are essential oils derived from plants, such as orange oil, lemon oil, peppermint oil, rosemary oil, concentrated from other products, such as butter flavour, by fermentation, such as cheese flavour and yoghurt flavour, or produced synthetically, such as the various esters and aldehydes, ketones etc. These can be included in fat-in-water emulsions according to the invention.

"Trigeminal stimulants" refers to fat-soluble ingredients that induce a burning heat sensation or cooling sensation in the mouth, such as the alkaloid capsaicin, which is responsible for the burning heat sensation obtained from chilli peppers, and menthol, which is responsible for the cooling sensation from mint. These can be included in fat-in-water emulsions according to the invention.

"Salivary α-amylases" (EC 3.2.1.1, α-1,4-glucan-4-glucanohydrolases) refers to salivary enzymes causing hydrolysis of α - D - (1→4) glucan linkages of starch or modified starch in-mouth. "Amylase-induced breakdown" of an emulsion according to the invention, refers to the in-mouth process whereby the salivary amylases destabilize the emulsion by their enzymatic activity, which results in droplet coalescence and an improved sensory rating of the food compositions which comprise the emulsions.

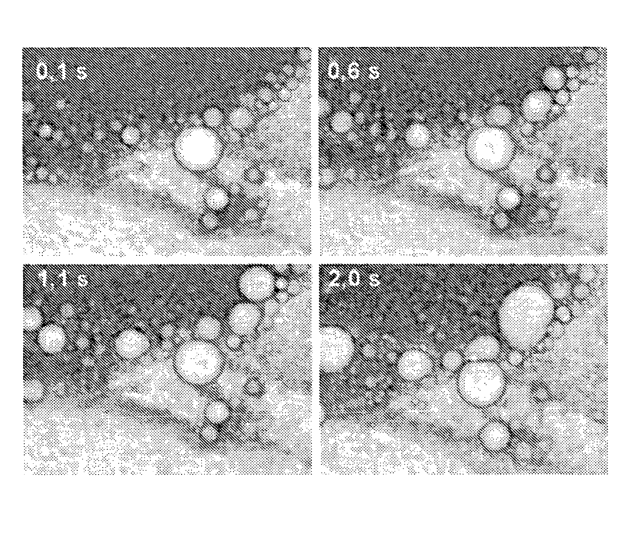

"Amylase-induced coalescence", or "saliva-induced coalescence" or "amylase - / saliva - induced droplet coalescence" refers herein to an amylase-induced breakdown (in the oral cavity) of an emulsifier comprising hydrophobized starch, whereby the emulsion is destabilized, resulting in coalescence of emulsion droplets. Coalescence can be seen and quantified by microscopically analysing the emulsion (or food composition comprising the emulsion) within the first minutes after it has been mixed with an equal volume of fresh human saliva at temperatures between about 20 and 40 degrees Celcius. Instead of saliva also a solution of commercial amylase can be used at such concentration where its starch hydrolysing activity can be microscopically established when brought in contact with a dispersion of natural potato starch that has been partially gelatinized with a heating and cooling treatment so that the starch granules are swollen to several times their initial diameter by still clearly visible. See Example and Figure 1.

### DETAILED DESCRIPTION OF THE INVENTION

It was found that when modified starch, especially hydrophobized starch, is used as emulsifier for fat in water, this resulted in a modulated sensory rating of the food composition comprising or consisting of such emulsions. Especially fat and thickness related sensory attributes were modulated, having been given a significantly higher sensory rating compared to controls (see Example). The modified starch according the present invention is, therefore, used to modulate sensory characteristics of emulsions and/or food products made using, and comprising, such emulsions.

Without limiting the invention, the underlying basis for this finding appears to be that the emulsion is destabilized upon contact with saliva in the oral cavity. The activity of amylases appears to at least partially break the emulsifier down (referred to as amylase- or saliva-induced coalescence), leading to coalescence phenomena which in turn contribute and/or lead to a modulated sensory rating. This finding is in contrast to WO2005070227, wherein an improved mouthfeel was brought about by including amylase inhibitors in a food composition.

Thus, in one embodiment the invention provides the use of a modified starch as an emulsifier for the preparation of a food composition comprising fat, for modulating (especially for improving) the sensory rating of said food composition and/or of the emulsion as such. The invention thus can be worded as the use of a modified starch for improving the sensory rating of an emulsion, wherein said modified starch is used for the preparation of a food composition, said food composition comprising or consisting of said emulsion. Obviously the modified starch is an emulsifier for fat.
or alternatively the use of a modified starch in the preparation of a food composition, said food composition comprising or consisting of an emulsion, wherein the modified starch is used for improving the sensory rating of said emulsion

Modified starch, in particular chemically modified, especially hydrophobized starch such as OSA starch, is prepared using known methods as referred to above or obtained from commercial suppliers such as Roquette. This starch is used to make a fat-in-water emulsion by known methods, such as high pressure homogenization and others. For example, OSA is first dissolved in water, optionally in the presence of salt and the OSA solution and fat phase are emulsified by homogenization. The sensory rating of the emulsion or of food compositions comprising the emulsion is modulated, compared to suitable control emulsions or control compositions. For example, a low-fat emulsion comprising modified starch as emulsifier (or a food composition comprising or consisting of this emulsion) will have a modulated (preferably an improved) sensory rating compared to the same low-fat emulsion which was prepared using a non-starch emulsifier such as WPI, sodium caseinate, or a mixture of one or more non-starch emulsifiers (or compared to food compositions comprising or consisting of this control emulsion). Thus, a low-fat emulsion will be perceived in-mouth as modulated in one or more sensory attributes, preferably fat and/or thickness related attributes such as creamy and/or fatty mouth feel.

Similarly, a low-fat emulsion comprising modified starch (or a food composition comprising or consisting of this emulsion) will have at least the same sensory rating compared to a "normal-fat emulsion" which was prepared using non-starch emulsifier, such as WPI (or compared to food compositions comprising or consisting of this control "normal fat emulsion"), but which comprises "normal" amounts of emulsified fat. Thus, a low-fat emulsion comprising modified starch will be perceived in-mouth as having at least equivalent fat and/or thickness related sensory attributes, such as creamy and/or fatty mouth feel, as a "normal fat" control which does not comprise or consist of an emulsion made using modified starch and which further differs in the amount of emulsified fat. Depending on the kind of food product an emulsion comprising modified starch (or a food composition comprising or consisting of such an emulsion) may comprise at least 10%, 20%, preferably at least 30%, 40% or 50%, 60%, 70%, 80%, 90%, 95% or 99% less emulsified fat relative to an equivalent emulsion made using a non-starch emulsifier such as WPI, without compromising the sensory rating of the emulsion or food composition.

A modulation of the sensory rating, or an equivalent sensory rating, can be tested by using sensory tests, whereby a test panel of people rates a range of sensory attributes of the food composition or emulsion. Preferably, at least fat and/or thickness related attributes such as creamy and/or fatty mouthfeel of the emulsion and of the food compositions comprising emulsions made using modified starch are changed.

A modulation in sensory rating is understood to be a modulation or improvement in at least one sensory attribute of the food composition. As modulation and improvement are relative terms, it is understood that the modulation / improvement should be repeatable and statistically significant. Generally a statistical confidence level of at least 95%, preferably at least 99% preferably is obtained. This means for example that sensory ratings preferably are carried out by at least eight highly trained subjects and preferably repeated at least twice. In order to determine the sensory rating an attribute of a (modified) food-product or OSA-emulsion, trained subjects are provided with the modified food-product or emulsion (stimulus) and the corresponding controls and rate a range of sensory attributes of the products, in particular fat and/or thickness related attributes using a predetermined scale, as illustrated in the Examples. A skilled person will be able to use standard sensory rating methods to determine whether a starch-based product, which has been modified by inclusion of modified starch, has one or more modulated / improved sensory ratings compared to suitable control compositions (as described above). The same applies for testing whether an OSA-emulsion, or a food composition comprising it, has at least an essentially equivalent sensory rating compared to a suitable control.

In a specific embodiment of the invention the sensory rating of one or more attributes selected from e.g. aroma attributes (e.g. aroma intensity, vanilla aroma), mouthfeel attributes (e.g. thickness, creaminess, fatty mouthfeel), flavor attributes (e.g. vanilla), afterfeel attributes (e.g. creamy afterfeel) and aftertaste attributes (e.g. creamy aftertaste) are modulated by using a modified starch as emulsifier. The rating of the modulated attribute assigned to the test product is statistically significantly different (p<0.05) from the rating of the corresponding attribute of the control product using a statistical repeated-measures design. The same applies for testing whether an emulsion, or a food composition comprising it, has at least an equivalent sensory rating compared to a suitable control.

The modified starch may be used as an emulsifier for improving the sensory rating of any type of food composition (solid, liquid or semi-solid), such as deserts (yoghurts, custard, dressings, etc.), milk, soups or drinks. Thus, when referring to "food compositions" it is understood that this encompasses liquid compositions comprising or consisting of emulsions according to the invention.

In another embodiment, the food composition further comprises at least one fat soluble flavour and/or at least one trigeminal stimulant. Such flavours and/or stimulants are suitably added to the fat component used for preparing the emulsion, so that they are entrapped in the fat droplets. Alternatively, the flavour and/or trigeminal stimulant may already comprise or consist of lipid (for example citric flavour oil and orange flavour oil, or a fat solution comprising one or more trigeminal stimulants), in which case it may be used as such in the preparation of the OSA-emulsion. The fast in-mouth droplet coalescence results in the release of the fat-soluble flavour and/or stimulant into the mouth cavity, providing an improved perception of the flavour and/or stimulant. Which amount of the flavour and/or stimulant is suitable depends on the type of food product to be made. Suitable fat-soluble flavours are essential oils derived from plants, such as orange oil, lemon oil, peppermint oil, rosemary oil, concentrated from other products, such as butter flavour, by fermentation, such as cheese flavour and yoghurt flavour, or produced synthetically, such as the various esters and aldehydes, ketones etc.

In this embodiment, the sensory attributes which are modulated are (preferably in addition to one or more other sensory attributes) taste and/or aroma of the emulsion and food compositions comprising or consisting of the emulsion.

The food composition, made using modified starch as an emulsifier, and using triglyceride fats comprises between 0.5 and 80 wt% OSA-emulsified fat, preferably between 0.5 and 60 wt%, between 0.5 and 50 wt%, between 0.5 and 40 wt%, between 0.5 and 30 wt%, between 0.5 and 20 wt%, and most preferably between 0.5 and 10 wt%, between 0.5 and 5 wt%, between 0.5 and 2 wt%, or less. Preferred fat sources are vegetable oils, such as olive oil, sunflower oil, canola oil and animal fat or milk fat, or modified fats, or mixtures of any of these. The fats can be modified for example by transesterification, fractionation or hardening.

For food compositions, made using modified starch as an emulsifier, and using a flavour oil and/or a solution comprising or consisting of at least one trigeminal stimulus in a triglyceride fat, the minimal amounts of the OSA-emulsified flavour oil required, and/or the OSA-emulsified triglyceride fat containing the trigeminal stimulus required, depends on the concentration of the flavouring compounds and/or trigeminal stimulant(s) in the fat and on the intensity of the flavour and/or trigeminal stimulus desired in the food product. The concentration of these flavours and/or trigeminal stimulating fat may be similar to that that of triglyceride fats, but can be lowered to a concentration needed to obtain the desired flavour and/or trigeminal effect for the specific application, and may then be as low as in the ppm (parts per million) range.

In a preferred embodiment the food composition is a low-fat food composition comprising between 0.1 and 10 wt%, preferably between 0.1 or 0.5 and 10 wt% OSA-emulsified fat, or less, such as 0.1-5%, 0.5-5 wt%, or 0.1-2 wt% or 0.5-2 wt%. The use of modified starch for modulating the sensory attributes of low fat products is especially advantageous, as the in-mouth droplet coalescence results in modulated / increased fat and/or thickness related perception, despite the low level of fat being present.

In one embodiment of the invention the emulsion according to the invention (or the emulsion-comprising food composition) comprises at least 10% less, preferably at least 20% less, more preferably at least 30% less (or even less, as described above), emulsified fat relative to a normal-fat emulsion (or food composition comprising it), whereby the normal fat emulsion differs from the emulsion according to the invention only in the relative emulsified fat content and in the absence of hydrophobically modified starch used to keep the fat in emulsified state, and whereby the sensory rating of the emulsion according to the invention is at least identical or essentially similar to that of the normal-fat emulsion.

Thus the invention also relates to a food composition comprising at least 10% less, preferably at least 20% less, more preferably at least 30% less fat than a normal-fat food composition, whereby the normal-fat food composition differs from the food composition only in the emulsified fat content and in the absence of modified starch as emulsifier, and whereby the sensory rating of one or more fat- and/or thickness related sensory attributes of said food composition is at least essentially equivalent or improved compared to that of the normal-fat food composition.

The modified starch used is preferably hydrophobized starch (being sensitive to amylase induced breakdown), and one particularly preferred hydrophobized starch is n-octenyl succinic anhydride (OSA starch). When used in the preparation of an emulsion, the hydrophobized starch should be capable of leading to rapid droplet coalescence when the emulsion is contacted with amylase *in vitro* (e.g. on a slide / microscopically) and/or *in vivo* (in-mouth). Droplet coalescence can be assessed qualitatively or quantitatively, in relation to a suitable reference emulsion. The emulsions prepared using hydrophobized starch are thus sensitive to salivary-amylase induced breakdown. For example, no saliva-induced coalescence was found with emulsions stabilized with an adsorbed layer of WPI and in the continuous phase WPI or OSA, whereas emulsions stabilized with OSA as adsorbed layer and OSA as continuous phase do show coalescence upon mixing with saliva. Thus, any hydrophobized starch with has this capability is a suitable starch for use herein and for distinguishing emulsions according to the invention from other emulsions. "Rapid droplet coalescence" refers to a droplet coalescence within three minutes, i.e. within 0-180 seconds of contact with the enzyme, preferably within 5, 10, 20 or 30 seconds. Such rapid coalescence will not be seen in the reference emulsions.

Detailed studies revealed that the location of the modified starch in the emulsion is important. Apparently, OSA is effective in saliva-induced coalescence when adsorbed on the droplet interface. It is noted that other materials present in the continuous phase may inhibit this special OSA-functionality. For example, in the special case that the emulsion is stabilized with an adsorbed layer of OSA and contains WPI in the continuous phase, saliva-induced coalescence may to some extent be inhibited.

Methods can be developed for determining the presence of and optionally for quantifying the amount of hydrophobized starch (OSA starch) present at the starch-lipid interface of the droplets (as distinguished from hydrophobized starch within the bulk).

The amount of hydrophobized starch used for making the emulsion depends on the amount of fat used, and preferably ranges between 0.1 and 0.9 g of hydrophobized starch per gram of fat which is present in the emulsion. Preferably, from about 0.10 g, 0.15g, 0.20g, 0.25g, 0.5g or 0.75g up to 0.9 g or 1 gram of hydrophobized starch is used per gram of OSA-emulsified fat. Ratios of hydrophobized starch to fat used range thus from 1:10 to 1:1, such as 1:9, 1:8, 1:7, 1:6, 1:5, 1:4, 1:3, 1:2, or ratios in between. For example for 40 wt% fat about 4 wt%, 10 wt%, 20 wt%, 25 wt% or 40% modified starch, based on total amount of the product, is used. In one embodiment of the invention the ratio of hydrophobized starch to fat is preferably not 1:1, more preferably less than 1 g hydrophobized starch us used per 1 g fat.

Also provided is a fat-in-water emulsion comprising between 0.1 wt% and 80 wt% emulsified triglyceride fat (as described further above), wherein all or at least part of the fat is OSA-emulsified fat made using between 0.10 and 0.8 or 0.9 gram of hydrophobized starch per gram of fat, more preferably between 0.2 and 0.75 gram, or between 0.25 and 0.75 gram hydrophobized starch per gram fat. This fat-in-water emulsion preferably further comprises at least one or more fat-soluble flavors and/or trigeminal stimulants.

Thus, the fat component of the fat-in-water emulsion may comprise or consist of a flavour oil (as described above) and/or a solution of a trigeminal stimulus in a triglyceride fat (as described above).

In a further embodiment a food composition comprising or consisting of any of the fat-in-water emulsion described herein is provided, e.g. concerns the use of a modified starch in the preparation of a food composition, said food composition comprising or consisting of an emulsion, wherein the modified starch is used for improving the sensory rating of said emulsion. This embodiment thus relates to the use of a modified starch for improving the sensory rating of an emulsion as such, wherein said modified starch is used as an emulsifier of fat and said emulsion is used for the preparation of a food composition. In one embodiment the emulsion, and the hydrophobized starch comprised therein, is about evenly distributed throughout the final food composition. Said use preferably involves the modified starch as an emulsifier within said emulsion. Even more preferably, the modified starch additionally fulfils a role as an emulsifier within the food composition which has been prepared using the emulsion. That is, preferably, at least part of the fat which is present in said food composition is homogeneously dispersed (e.g. as small droplets) throughout the food composition by the action of the modified starch as an emulsifier. Thus, the modified starch is preferably mixed with the food composition as a whole, and is not present in only a part or a layer of the final food composition.

Therefore, preferably, the food composition is in one embodiment of the invention a liquid or a semi-solid composition. More preferably, the food composition is a liquid composition. In one embodiment of the invention it is, therefore, preferred that the food composition is not a solid food composition, i.e. that it comprises some fluidity at room temperature (e.g. it may be a gel, cream, etc.). Even more preferably, the food composition does not essentially consist of solid products, such as fish or meat, e.g. a whole piece of meat or fish, such as a steak or fillet.

Preferably, the emulsion and/or food composition according to the present invention is not a static soak, a marinade or a frying coating for the treatment of food and/or foodstuffs, especially for solid food and/or foodstuffs. It is particularly preferable that the emulsion according to the present invention is not used as a static soak, as a marinade or as a frying coating for treating fish or meat. Preferably the food composition according to the present invention is not fish or meat or minced meat.

Thus, other food grade components may be added to the emulsion (or *vice versa* the emulsion may be added to other food grade components), such as vitamins, water soluble flavours, spices, aromas, colouring agents, proteins or peptides, amino acids, fatty acids, fats (such as non-emulsified fats and/or emulsified fats prepared using non-starch emulsifiers or other emulsifiers, such as WPI), milk or milk components (such as milk proteins or protein hydrolysates), enzymes, probiotics, prebiotics, other food grade bacterial cultures, polysaccharides, oligosaccharides, thickeners, gelling agents, etc.

The food composition is preferably a liquid food composition and/or a semi-solid food composition. Preferred semi-solid food compositions include a mousse (for example, as a dessert), a mayonnaise, a spread, a cream, an ice-cream, soft cheese or fresh cheese, or a pudding. Preferred liquid food compositions include a sauce, a dressing, a soup, milk, a fermented milk, yoghurt or a custard.

Preferred food compositions further comprise a baby-food, cream, ice-cream, cheese, pudding, cereal bar, candy bar, protein-gel based products, such as Tofu, Valess, meat-replacers, etc. Preferably, the candy bar comprises a semi-solid or liquid phase comprising the emulsion according to the present invention.

Preferably, the food composition is not a solid food composition. Even more preferably, the food composition does not essentially consist of a whole piece of meat or fish, such as a steak or fillet.

In yet another embodiment a method for modulating / improving the sensory rating of a food composition comprising (emulsified) fat is provided, said method comprising including a modified starch, especially hydrophobized starch, as an emulsifier in said food composition. Preferably the method comprises assessing the sensory rating of said food composition.

Said method comprises including a modified starch as an emulsifier within said food composition, preferably, at least part of the fat which is present in said food composition is homogeneously dispersed (e.g. as small droplets) throughout the food composition by the action of the modified starch as an emulsifier. Thus, the modified starch is preferably mixed with the food composition, so that it is present throughout essentially the whole composition.

Therefore in one embodiment the food composition is a liquid or a semi-solid composition. More preferably, the food composition is a liquid composition. It is in one embodiment preferred that the food composition is not a solid food composition.

The method may optionally further comprise the step of comparing the sensory rating of the food composition comprising or consisting of the emulsion (i.e. the "test" composition) to the sensory rating of a control food composition and selecting a food composition having a modulated, especially an improved, sensory rating or, in case of less emulsified fat being present compared to the control food composition, having at least an identical sensory rating compared to the control food composition. Of course, several test food compositions may be compared to several control compositions at the same time or sequentially. For example, test compositions comprising OSA and either 1wt%, 2wt%, 3.5wt%, 5 wt% emulsified fat (or other amounts) may be compared to control compositions comprising WPI and a constant amount of emulsified fat, e.g. 5 wt% emulsified fat. Thus, the test compositions comprise 80% less, 60% less, 30% less and 0% less fat than the control. Following the sensory testing, the test composition which results in at least the same sensory rating than the control composition is identified and selected. This may for example be a test composition comprising 2wt% emulsified fat (i.e. 60% less fat than the control), while having at least the same creamy and/or fatty mouthfeel as the control composition.

Alternatively or in addition to assessments of sensory ratings, one may also assess amylase- or saliva-induced coalescence, because the OSA-emulsions of the invention (and food compositions comprising these) show a different degree and pattern of coalescence compared to control emulsions. Coalescence is preferably assessed visually (with the aid of a microscope), by contacting the emulsion with saliva or an amylase containing solution and observing and optionally quantifying the droplet coalescence. See Examples and Figure 1. It is noted that quantification is difficult, but that the visual observance of the process is sufficient to distinguish between OSA-emulsions and controls, as the differences in speed of droplet coalescence, droplet size and distribution of fused droplets is qualitatively different.

The control food composition or control emulsion is selected from one of the following:
a) the same emulsion as the "test composition" (or a food composition comprising the emulsion), wherein the hydrophobized starch is replaced with an emulsion comprising a non-starch emulsifier, such as WPI, sodium caseinate, low molecular weight surfactants; or a natural emulsion such as milk or milk cream and
b) the same emulsion as the "test composition" (or a food composition comprising the emulsion), wherein the control emulsion comprising more emulsified fat relative to the test composition, preferably at least 10% more emulsified fat and wherein the hydrophobized starch of the test composition is replaced with a non-starch emulsifier such as WPI, sodium caseinate, low molecular weight surfactants.

Preferably in b) one or more control emulsions comprising at least 10%, 20%, 30%, 40%, 50%, 60%, 70%, 80% more emulsified fat relative to the test composition are used.

Encompassed by the present invention are qualifications on packaging of food compositions comprising or consisting of an emulsion comprising modified starch like better taste, improved taste, creamy, more creamy, improved creaminess and the like.

The following non-limiting examples illustrate the invention.

### Figure legends

Figure 1 shows consecutive stages in saliva induced coalescence of an emulsion composed of 40 % sunflower oil in distilled water and stabilized by OSA-starch. The emulsion is brought in contact with a droplet of saliva, after which the saliva mixes into the emulsion by diffusion and convection, leading to a coarsening of the emulsion droplets by coalescence. Indicated are the times after the emulsion has come in contact with saliva.

### EXAMPLES

### Example 1

The perception of OSA-stabilized model emulsions was compared with stable emulsions, stabilized with whey protein isolate (WPI) or WPI with sodium caseinate (WPI/NaCas) and with emulsions sensitive towards shear-induced coalescence (reduced amounts of WPI)

### Methods

Stock emulsions containing 40% oil stabilized by WPI (Bipro, Davisco) were diluted to 10% sunflower-oil (Cargill) in 0.01 M NaCl adjusted to pH 6.7. OSA emulsions were prepared by homogenizing 10% sunflower oil in 2.5% octenylsuccinate starch (OSA; Cleargum CO01, Roquette) solution and subsequently bringing the pH towards 6.7 WPI/NaCas emulsions were prepared by addition of a low amount of sodium caseinate (NaCas) to a WPI emulsion and heating for 17 min at 90°C followed by rapid cooling. All emulsions contained 2 wt% sucrose and 0.033 wt% vanilla flavor. The viscosity and droplet sizes of all products was comparable

The emulsions were evaluated by a trained sensory panel (n=8) via semi-monadicaly assessments in triplicate on visual analogue scales. Presentation order was randomly designed over panellists (balanced latin square design).

### Results

Table 1 shows significant differences (in bold) in mouth feel and after feel attributes calculated with ANOVA analysis for repeated measures. OSA emulsions increased perceived mouth feel thick, creamy, fatty, slippery mouth filling and sticky, and after feel sticky, creamy, coating, slimy, and satiating (p<0.05). Moreover dryness, roughness and astringent sensations decreased. The perception of the taste attributes intensity, vanilla, sweet, oil and cream also increased for OSA-emulsions. Differences in odour perception were minor.

This example shows that the use of modified starch (OSA) as emulsifier results in a significantly modulated sensory perception of several fat and thickness related sensory attributes.

**Table 1**

| Attribute | 1% WPI | 0.1% WPI | WPI NaCas | OSA | Attribute description |
|---|---|---|---|---|---|
| *Mouth feel attributes* | | | | | |
| Thick | **33.9** | **31.6** | **34.9** | **64.5** | Thickness of the product |
| Creamy | **41.0** | **37.1** | **40.8** | **75.7** | Velvety; warm; soft |
| Fatty | **41.7** | **32.8** | **37.2** | **74.5** | Oil-like; fatty layer in the mouth |
| Slippery | **52.4** | **48.9** | **50.9** | **70.5** | Slippery feeling |
| Sticky | **27.8** | **27.9** | **26.1** | **36.1** | Sticky, tacky |
| Rough | 29.1 | 32.0 | 32.5 | 25.2 | Rough feeling on the teeth and/or tongue |
| Dry | **29.6** | **31.0** | **34.6** | **22.8** | Dry feeling in the mouth; saliva is absorbed |
| Melting | 12.2 | 12.1 | 13.2 | 17.2 | Dissolves in the oral cavity; structure vanishes |
| Mouthfilling | **41.2** | **37.1** | **37.4** | **75.3** | Feeling that whole the mouth is filled up |

| *After feel attributes* | | | | | |
|---|---|---|---|---|---|
| Astrigent | 26.3 | 26.9 | 29.4 | 15.4 | Oil-like; fatty layer in the mouth |
| **Creamy** | **29.8** | **27.8** | **26.9** | **72.0** | Velvety; warm; soft |
| Dry | 43.3 | 45.6 | 46.8 | 26.3 | Saliva absorbing; dry tongue |
| Rought | 41.9 | 39.0 | 43.3 | 27.2 | Rough feeling on the teeth |
| Raw tongue | 29.9 | 32.4 | 32.3 | 19.0 | Raw feeling; sandpaper or cat's tongue |
| Mealy | 18.2 | 16.6 | 17.7 | 14.5 | Fine particles, floury, powdery |
| **Slimy** | **26.0** | **23.8** | **22.8** | **50.2** | Slippery like porridge |
| **Coating** | **40.5** | **38.1** | **35.2** | **70.5** | Fatty coating on tongue, lips or cheek |
| **Sticky** | **28.9** | **28.0** | **29.2** | **43.8** | Syrupy; stickily |
| **Satiation** | **32.5** | **28.8** | **29.6** | **73.7** | Hunger alleviation; filling; satisfactory |
| Tinteling | 14.3 | 16.7 | 17.1 | 11.7 | Pungent; tingling feeling on lips and tongue |

## Claims

1. Use of a hydrophobized starch for improving the sensory rating of an emulsion, wherein said hydrophobized starch is used for the preparation of a food composition, said food composition comprising or consisting of said emulsion.

2. The use according to claim 1, wherein the sensory rating is a fat and/or thickness related sensory attribute.

3. The use according to any one of claims 1 or 2, wherein the food composition further comprises at least one fat soluble flavour and/or at least one trigeminal stimulant.

4. The use according to any one of the preceding claims, wherein the food composition comprises between 0.1 and 80 wt%, preferably between 0.5 and 80 wt% emulsified fat.

5. The use according to claim 4, wherein the food composition is a low-fat food composition comprising between 0.1 and 10 wt% or between 0.5 and 10 wt% emulsified fat.

6. The use according to any one of the preceding claims, wherein the food composition comprises at least 30% less fat than a normal-fat food composition, whereby the normal-fat food composition differs from the food composition only in the emulsified fat content and in the absence of modified starch as emulsifier, and whereby the sensory rating of one or more fat- and/or thickness related sensory attributes of said food composition is at least essentially equivalent or improved compared to that of the normal-fat food composition.

7. The use according to any of the preceding claims, wherein the sensory rating of said food composition is improved compared to the same composition comprising a control emulsion which does not comprise a modified starch as emulsifier.

8. The use according to any one of the preceding claims, wherein said hydrophobized starch being sensitive to salivary-amylase induced breakdown.

9. The use according to claim 8, wherein the food composition comprises between 1 and 5 wt% hydrophobized starch.

10. The use according to claim 8 or 9, wherein the hydrophobized starch is starch modified by n-octenyl succinic anhydride (OSA).

11. A fat-in-water emulsion comprising between 0.1 and 80 wt% fat, in which all or part of the emulsified fat is made using between 0.10 and 0.90 grams of hydrophobized starch as emulsifier per gram of fat, and wherein said fat comprises or consists of a fat-soluble flavour and/or a trigeminal stimulant.

12. A food composition comprising the fat-in-water emulsion according to claim 11.

13. The food composition according to claim 12, said food composition being a dessert, a mayonnaise, a sauce, a dressing, a baby-food, a soup, a cereal bar, a candy bar, a protein-gel based food product or a dairy product, such as milk, yoghurt, custard, cheese, cream, ice-cream or pudding.

## Patentansprüche

1. Verwendung einer hydrophobierten Stärke zum Verbessern der sensorischen Bewertung einer Emulsion, wobei die hydrophobierte Stärke für die Herstellung einer Nahrungsmittelzusammensetzung verwendet wird, wobei die Nahrungsmittelzusammensetzung die Emulsion umfasst oder aus der Emulsion besteht.

2. Verwendung nach Anspruch 1, wobei die sensorische Bewertung eine mit Fett und/oder der Dickflüssigkeit zusammenhängende sensorische Eigenschaft ist.

3. Verwendung nach einem der Ansprüche 1 oder 2, wobei die Nahrungsmittelzusammensetzung außerdem wenigstens einen fettlöslichen Aromastoff und/oder wenigstens ein Trigeminus-Stimulans umfasst.

4. Verwendung nach einem der vorangehenden Ansprüche, wobei die Nahrungsmittelzusammensetzung zwischen 0,1 und 80 Gew.-%, vorzugsweise zwischen 0,5 und 80 Gew.-% emulgiertes Fett umfasst.

5. Verwendung nach Anspruch 4, wobei die Nahrungsmittelzusammensetzung eine fettarme Nahrungsmittelzusammensetzung ist, die zwischen 0,1 und 10 Gew.-% oder zwischen 0,5 und 10 Gew.-% emulgiertes Fett umfasst.

6. Verwendung nach einem der vorangehenden Ansprüche, wobei die Nahrungsmittelzusammensetzung wenigstens 30 % weniger Fett umfasst als eine Nahrungsmittelzusammensetzung mit normalem Fettgehalt, wobei die Nahrungsmittelzusammensetzung mit normalem Fettgehalt sich von der Nahrungsmittelzusammensetzung nur durch den Gehalt an emulgiertem Fett und die Abwesenheit von modifizierter Stärke als Emulgator unterscheidet und wobei die sensorische Bewertung von einer oder mehreren mit Fett und/oder der Dickflüssigkeit zusammenhängenden sensorischen Eigenschaften der Nahrungsmittelzusammensetzung wenigstens im Wesentlichen äquivalent oder verbessert ist im Vergleich zu derjenigen der Nahrungsmittelzusammensetzung mit normalem Fettgehalt.

7. Verwendung nach einem der vorangehenden Ansprüche, wobei die sensorische Bewertung der Nahrungsmittelzusammensetzung verbessert ist im Vergleich zu der gleichen Zusammensetzung, die eine Kontrollemulsion umfasst, welche keine modifizierte Stärke als Emulgator umfasst.

8. Verwendung nach einem der vorangehenden Ansprüche, wobei die hydrophobierte Stärke für einen durch Speichel-Amylase induzierten Abbau empfindlich ist.

9. Verwendung nach Anspruch 8, wobei die Nahrungsmittelzusammensetzung zwischen 1 und 5 Gew.-% hydrophobierte Stärke umfasst.

10. Verwendung nach Anspruch 8 oder 9, wobei die hydrophobierte Stärke eine durch n-Octenyl-bernsteinsäureanhydrid (OSA) modifizierte Stärke ist.

11. Fett-in-Wasser-Emulsion umfassend zwischen 0,1 und 80 Gew.-% Fett, in welcher das gesamte emulgierte Fett oder ein Teil davon unter Verwendung von zwischen 0,10 und 0,90 Gramm hydrophobierter Stärke als Emulgator pro Gramm Fett hergestellt ist und wobei das Fett einen fettlöslichen Aromastoff und/oder ein Trigeminus-Stimulans umfasst oder daraus besteht.

12. Nahrungsmittelzusammensetzung umfassend die Fett-in-Wasser-Emulsion nach Anspruch 11.

13. Nahrungsmittelzusammensetzung nach Anspruch 12, wobei es sich bei der Nahrungsmittelzusammensetzung um ein Dessert, eine Mayonnaise, eine Soße, ein Dressing, eine Babynahrung, eine Suppe, einen Getreideflockenriegel, einen Schokoriegel, ein Nahrungsmittelprodukt auf Protein-Gel-Basis oder ein Molkereiprodukt wie Milch, Yoghurt, Eiercreme, Käse, Sahne, Speiseeis oder Pudding handelt.

## Revendications

1. Utilisation d'un amidon hydrophobisé pour améliorer les caractéristiques sensorielles d'une émulsion, dans laquelle ledit amidon hydrophobisé est utilisé pour la préparation d'une composition alimentaire, ladite composition alimentaire comprenant ladite émulsion ou étant constituée de ladite émulsion.

2. Utilisation selon la revendication 1, dans laquelle les caractéristiques sensorielles sont une propriété sensorielle liée au caractère gras et/ou à la consistance.

3. Utilisation selon l'une quelconque des revendications 1 ou 2, dans laquelle la composition alimentaire comprend en outre au moins un arôme liposoluble et/ou au moins un agent stimulant le nerf trijumeau.

4. Utilisation selon l'une quelconque des revendications précédentes, dans laquelle la composition alimentaire comprend de 0,1 à 80 % en poids, de préférence de 0,5 à 80 % en poids, de matière grasse émulsifiée.

5. Utilisation selon la revendication 4, dans laquelle la composition alimentaire est une composition alimentaire à faible teneur en matière grasse comprenant de 0,1 à 10 % en poids ou de 0,5 à 10 % en poids de matière grasse émulsifiée.

6. Utilisation selon l'une quelconque des revendications précédentes, dans laquelle la composition alimentaire comprend au moins 30 % de matière grasse en moins qu'une composition alimentaire à teneur normale en matière grasse, la composition alimentaire à teneur normale en matière grasse différant ainsi de la composition alimentaire uniquement par la teneur en matière grasse émulsifiée et par l'absence d'amidon modifié en tant qu'émulsifiant, et les caractéristiques sensorielles d'une ou de plusieurs propriétés sensorielles liées au caractère gras et/ou à la consistance de ladite composition alimentaire étant au moins sensiblement équivalente ou améliorée par rapport à celle de la composition alimentaire à teneur normale en matière grasse.

7. Utilisation selon l'une quelconque des revendications précédentes, dans laquelle les caractéristiques sensorielles de ladite composition alimentaire sont améliorées par rapport à la même composition comprenant une émulsion témoin qui ne comprend pas d'amidon modifié en tant qu'émulsifiant.

8. Utilisation selon l'une quelconque des revendications précédentes, dans laquelle ledit amidon hydrophobisé est sensible à la dégradation induite par l'amylase salivaire.

9. Utilisation selon la revendication 8, dans laquelle la composition alimentaire comprend de 1 à 5 % en poids d'amidon hydrophobisé.

10. Utilisation selon la revendication 8 ou la revendication 9, dans laquelle l'amidon hydrophobisé est de l'amidon modifié par l'anhydride n-octénylsuccinique (OSA).

11. Emulsion huile-dans-l'eau comprenant de 0,1 à 80 % en poids de matière grasse, dans laquelle la totalité ou une partie de la matière grasse émulsifiée est préparée en utilisant de 0,10 à 0,90 gramme d'amidon hydrophobisé en tant qu'émulsifiant par gramme de matière grasse, et dans laquelle ladite matière grasse comprend ou est constituée d'un arôme liposoluble et/ou un agent stimulant le nerf trijumeau.

12. Composition alimentaire comprenant l'émulsion huile-dans-l'eau selon la revendication 11.

13. Composition alimentaire selon la revendication 12, ladite composition alimentaire étant un dessert, une mayonnaise, une sauce, une sauce pour salade, un aliment pour bébés, une soupe, une barre de céréales, une barre de bonbon, un produit alimentaire à base de gel protéique ou un produit laitier tel que du lait, un yaourt, de la crème anglaise, du fromage, de la crème, de la crème glacée ou un gâteau.
